# EUROPÄISCHE PATENTSCHRIFT

(11) **EP 3 047 890 B1**
(45) Veröffentlichungstag und Bekanntmachung des Hinweises auf die Patenterteilung: **19.04.2017**
(21) Anmeldenummer: 15152464.2
(22) Anmeldetag: 26.01.2015
(51) Int. Cl.: B01D 35/02, B01D 46/00, B01D 46/02

(54) **Filter zum Filtern einer Flüssigkeit oder eines Gases**
Filter for filtering a liquid or a gas
Filtre destiné à filtrer un liquide ou un gaz

(43) Veröffentlichungstag der Anmeldung: 27.07.2016
(73) Patentinhaber: Sefar AG, 9410 Heiden (CH)
(72) Erfinder: Dür, Hansjörg, 6858 Schwarzach (AT)
(74) Vertreter: Wunderlich, Rainer

(56) Entgegenhaltungen:
- EP-A1- 1 419 720
- EP-A2- 2 329 872
- DE-U1- 8 526 820
- DE-U1-202008 012 284
- GB-A- 1 521 710

## Beschreibung

Die Erfindung betrifft einen Filter zum Filter einer Flüssigkeit oder eines Gases mit einem taschenförmigen Filterelement, welches einen hülsenförmigen Umfangsbereich, einen geschlossenen Kopfbereich und einen offenen Fußbereich aufweist, und einem Rahmenelement, welches einen ringförmigen Sockel, in welchem der Fußbereich des Filterelementes aufgenommen ist, und mindestens eine Stützstrebe aufweist, welche sich von dem Sockel weg entlang des Umfangsbereiches des Filterelementes erstreckt, gemäß dem Oberbegriff des Anspruchs 1.

Derartige hülsenförmige oder kerzenartige Filter werden vielfältig eingesetzt, insbesondere in Fluidleitungen, um etwa Feststoffpartikel rückzuhalten. Bei diesen Filtern ist es gewünscht, dass diese einerseits sehr kompakt sind, um diese auch in kleinen Leitungen anzuordnen. Andererseits sollen diese eine große wirksame Filterfläche aufweisen, so dass ein hinreichender Fluiddurchsatz bei einem möglichst geringen Strömungswiderstand gegeben ist.

Aus der EP 1 088 720 A2 geht ein Filter für eine Scheibenreinigungsanlage eines Kraftfahrzeuges mit einem Sockel und einem zylindrischen Filterelement hervor, welches über Stützstreben am Sockel gehaltert ist. An dem vom Sockel abgewandten Kopfbereich des Filterelementes ist ein scheibenförmiges Einlegeteil vorgesehen, welches über einen ringförmigen Halteabschnitt mit den Stützstreben verbunden ist.

Aus der DE 20 2011 109 523 U1 ist ein Filter zum Einsetzen in einen Einfüllstutzen eines Behälters bekannt. Dieser Filter weist ebenfalls ein Rahmenteil mit einem Sockel und in Längsrichtung verlaufenden Stützstreben auf, welche ein hülsenförmiges Filterelement halten. An dem dem Sockel abgewandten Auslaufende ist ein Filtersieb angeordnet, welches zur Strömungsrichtung geneigt ist.

Die Ausbildung des Filterelementes aus mehreren Teilen ist grundsätzlich arbeits- und kostenaufwändig. Zudem besteht ein Problem von möglichen Undichtigkeiten.

Aus der EP 2 165 749 B1 geht ein Filter mit einem Rahmenelement und einem Filterelement hervor. Das Filterelement ist als ein einfacher durchgehender Streifen ausgebildet, welcher sich an dem kerzenförmigen Filter entlang von zwei relativ breiten seitlichen Stützstreben erstreckt. Im Gegensatz zu einem taschen- oder beutelförmigen Filterelement ergibt sich bei diesem bekannten Filter aufgrund der relativ breiten seitlichen Stützstreben eine begrenzte Filterfläche.

Ein solcher Filter mit einem Rahmenelement mit zwei Stützstreben und einem ringförmigen Sockel, welcher auch als Rohrstutzen bezeichnet werden kann, geht auch aus der DE 20 2008 012 284 U1 hervor.

Ein in eine Kaffeetasse einhängbarer Filterbeutel, auch drip-bag genannt, ist aus EP 1 419 720 A1 bekannt. Dieser Filterbeutel weist an seinen gegenüberliegenden Seitenflächen faltbare Blechhaken auf.

Ein gattungsgemäßer Filter ist aus der DE 100 52 166 A1 bekannt. Das Filterelement ist dabei taschenförmig mit einem hülsenartigen Umfangsbereich ausgebildet, dessen Kopfbereich geschlossen und dessen Fußbereich offen ist. Der Fußbereich ist von einem ringförmigen Sockel oder Rohrstutzen zum Einbau in eine Ölleitung umschlossen. Das hülsenförmige Filterelement und der rohrstutzenartige Sockel bilden einen kerzenförmigen Filter. Das Filterelement ist dabei so konfektioniert, dass der geschlossene Kopfbereich entweder konvex, kuppelartig ausgebildet oder nach innen eingestülpt geformt ist. Bei einer Einstülpung nach innen erstrecken sich die seitlichen Stützstreben in die konkave Einstülpung hinein, um diese Filterform zu stabilisieren. Durch diese Stützstreben werden der Raum in der Einstülpung und die Filterfläche in nicht unerheblichem Maße eingeschränkt.

Der Erfindung liegt die **Aufgabe** zugrunde, einen Filter anzugeben, welcher bei einer guten Herstellbarkeit einen kompakten Aufbau und eine große Filterfläche ermöglicht.

Die Aufgabe wird nach der Erfindung durch einen Filter mit den Merkmalen des Anspruchs 1 gelöst. Bevorzugte Ausführungsformen der Erfindung sind in den abhängigen Ansprüchen angegeben.

Der erfindungsgemäße Filter ist dadurch gekennzeichnet, dass der Kopfbereich des Filterelementes sattelförmig ausgebildet ist, wobei zwei seitliche Spitzen vorgesehen sind, zwischen denen eine rinnenförmige Auskehlung ausgebildet ist.

Der erfindungsgemäße Filter weist ein taschen- oder beutelförmiges Filterelement auf, welches einfach herzustellen ist und eine große Filterfläche ermöglicht. Der offene Fußbereich des hülsenförmigen Filterelementes ist an dem ringförmigen Sockel angebracht, welcher insbesondere zum Einbau in eine Fluidleitung oder in eine Behälteröffnung ausgebildet ist. Der ringförmige Sockel mit der mindestens einen Stützstrebe des Rahmenelementes sorgt für eine Formstabilisierung des hülsenförmigen Umfangsbereiches des Filterelementes. Der vom Sockel abgewandte Kopfbereich des Filterelementes ist gemäß der Erfindung sattelförmig ausgebildet. Die Sattelform umfasst dabei zwei seitliche Spitzen, zwischen denen sich eine rinnenförmige Auskehlung erstreckt. Durch diese Sattelform wird eine relativ große Filterfläche auch im Kopfbereich des Filterelementes geschaffen, wobei gleichzeitig eine hohe Formstabilität gewährleistet ist. Insbesondere der teilweise konkav und teilweise konvex verlaufende Rand am Übergang des sattelförmigen Kopfbereiches am hülsenförmigen Umfangsbereich führt zu einer guten Festigkeit auch bei wechselnden Strömungen.

Grundsätzlich kann das taschenförmige Filterelement als ein einstückiger Formkörper gebildet, etwa tiefgezogen oder aus mehreren Teilstücken aufgebaut sein. Eine besonders vorteilhafte Ausführungsform der Erfindung besteht jedoch darin, dass das taschenförmige Filterelement aus einem einzelnen flächigen Filtermaterial durch Falten und Verschweißen von Randkanten gebildet ist. Auf diese Weise kann das taschenförmige Filterelement einfach und kostengünstig hergestellt werden. Das Materialstück kann effizient aus einem flächigen Ausgangsmaterial zugeschnitten werden.

Grundsätzlich sind verschiedene Falt- und Verschweißungsvarianten möglich. So können etwa zwei zu verschweißende Randkanten so angeordnet sein, dass diese etwa L-förmig verlaufen, wobei eine Randkante im Kopfbereich des Filterelementes und die andere Randkante entlang des Umfangsbereiches des Filterelementes verlaufen würde.

Eine besonders zweckmäßige Ausführungsvariante der Erfindung liegt darin, dass zwei verschweißte Randkanten vorgesehen sind, welche entlang einer Längsachse des Filterelementes verlaufen und sich von dem Fußbereich zu dem Kopfbereich des taschenförmigen Filterelementes erstrecken. Hierdurch werden die verschweißten Randkanten in den weniger belasteten Umfangsbereich des Filterelementes verlegt. Die verschweißten Randkanten können dabei durch die axial verlaufenden Stützstreben abgedeckt und zusätzlich stabilisiert werden.

Eine weitere bevorzugte Ausführungsvariante der Erfindung besteht darin, dass mindestens zwei Stützstreben paarweise vorgesehen sind, welche sich entlang von gegenüberliegenden Seiten des taschenförmigen Filterelementes erstrecken. Die Stützstreben sind dabei zumindest bereichsweise mit dem Filterelement verbunden, so dass sie die Form des insgesamt hülsen- oder kerzenförmigen Filterelementes stabilisieren. Eine gegenüberliegende und damit symmetrische Anordnung der zwei Stützstreben erlaubt eine symmetrische und damit gleichmäßige Belastung des Filters bei anliegender Strömung. Diese ist üblicherweise in Längsrichtung des Filters gerichtet.

Eine besonders stabile Ausbildung eines Filters wird gemäß einer weiteren Ausführungsform der Erfindung dadurch erreicht, dass die mindestens eine Stützstrebe sich entlang mindestens einer verschweißten Randkante des Filterelementes von dem Sockel bis zu einer der Spitzen im Kopfbereich erstreckt und dass die verschweißte Randkante durch die Stützstrebe abgedeckt ist. Damit wird den Stützstreben eine doppelte Funktion zugewiesen. Diese stabilisieren zum einen die Hülsenform des Filterelementes und schützen zum anderen die verschweißten Randkanten des Filterelementes. Hierdurch wird auch die Gefahr einer Undichtigkeit entlang der Randkanten herabgesetzt. Vorzugsweise können die Spitzen des Filterelementes von Abdeckkappen aufgenommen und abgedeckt sein, welche einstückig am oberen Ende der Stützstreben ausgebildet sind.

Eine weitere Verbesserung der Festigkeit und Stabilität des Filters wird gemäß einer bevorzugten Ausführungsform der Erfindung dadurch erzielt, dass an dem Kopfbereich die zwei Stützstreben eines Paares durch mindestens eine Querstrebe miteinander verbunden sind. Vorzugsweise ist die Querstrebe im Kopfbereich ebenfalls mit dem Filterelement zumindest bereichsweise verbunden, so dass die Querstrebe die Formgebung im Kopfbereich unterstützt und stabilisiert.

Dabei ist es nach einer weiteren Ausführungsform der Erfindung besonders vorteilhaft, dass die mindestens eine Querstrebe an die Sattelform des Kopfbereiches angepasst ist. Vorzugsweise kann dabei die Querstrebe über ihre gesamte Länge fest mit dem Filtermaterial des Filtermateriales im Kopfbereich verbunden sein. Bei einer Falt- und Verschweißungsvariante, bei welcher eine verschweißte Randkante im Kopfbereich verläuft, ist diese vorzugsweise durch eine Querstrebe abgedeckt.

Eine weitere Festigkeitserhöhung kann gemäß einer Ausführungsvariante der Erfindung dadurch erreicht werden, dass zwei Paare von Stützstreben angeordnet sind, welche um 90° versetzt zueinander am Umfang des Sockels angeordnet sind. Vorzugsweise können dabei die beiden Paare jeweils eine Querstrebe aufweisen, welche im Kopfbereich kreuzweise angeordnet sind. Vorzugsweise erstreckt sich dabei eine erste Querstrebe zwischen den beiden Spitzen im Kopfbereich, während sich die zweite Querstrebe rechtwinklig hierzu entlang der Rinnenachse der rinnenförmigen Auskehlung erstreckt. Hierdurch wird eine besonders stabile Form des Filterelementes erreicht.

Grundsätzlich können die Stütz- und Querstreben entlang nur der Innenseite oder der Außenseite des Filterelementes angeordnet sein. Bevorzugt ist es nach einer Ausführungsform der Erfindung, dass mindestens eine Stützstrebe und/oder mindestens eine Querstrebe an der Innenseite und der Außenseite des taschenförmigen Filterelementes angeordnet und mit dieser verbunden sind. Vorzugsweise sind alle Stütz- und Querstreben entlang der Innen- und Außenseite vorgesehen. Grundsätzlich ist es aber auch möglich, einen Teil der Streben an der Außenseite und einen Teil an der Innenseite des Filterelementes anzuordnen.

Grundsätzlich kann der erfindungsgemäße Filter in beliebiger Weise hergestellt werden. Eine besonders wirtschaftliche Herstellung ist gemäß einer Ausführung der Erfindung dadurch erreichbar, dass das Rahmenelement aus einem Kunststoffmaterial durch Gießen, insbesondere Spritzgießen, hergestellt ist, wobei das Filterelement beim Gießen mit dem Rahmenelement fest verbunden ist. Insbesondere wird das taschenförmige Filterelement in eine Gussform eingesetzt, so dass dieses beim Einschießen des aufgeschmolzenen Kunststoffmateriales unmittelbar fest mit dem Rahmenelement verbunden wird.

Zur Herstellung des Filterelementes können unterschiedliche Materialien eingesetzt werden. Besonders vorteilhaft ist es, dass das Filterelement ein Gewebe, ein Vlies, ein Gewirk und/oder eine Membran aufweist. Insbesondere kann das Filterelement aus einem flächigen Filtermaterial gebildet sein, welches auch aus einer Kombination der vorgenannten Materialien aufgebaut ist.

Weiterhin wird eine besonders kompakte Formgebung mit einer großen Filterfläche gemäß einer Ausführungsvariante der Erfindung dadurch erzielt, dass der Umfangsbereich des Filterelementes zylindrisch oder konisch ausgebildet ist.

Die Erfindung wird nachfolgend anhand von bevorzugten Ausführungsbeispielen weiter beschrieben, welche schematisch in den beigefügten Zeichnungen dargestellt sind. In den Zeichnungen zeigen:
- Fig. 1: eine perspektivische Ansicht eines ersten erfindungsgemäßen Filters mit zwei Stützstreben;
- Fig. 2: eine perspektivische Ansicht des ersten erfindungsgemäßen Filters von Fig. 1 von unten;
- Fig. 3: eine perspektivische Ansicht eines zweiten erfindungsgemäßen Filters mit einer Querstrebe;
- Fig. 4: eine perspektivische Ansicht eines dritten erfindungsgemäßen Filters mit vier Stützstreben;
- Fig. 5: eine perspektivische Ansicht eines vierten erfindungsgemäßen Filters mit zwei Querstreben; und
- Fig. 6: eine perspektivische Ansicht eines fünften erfindungsgemäßen Filter mit konischem Filterelement.

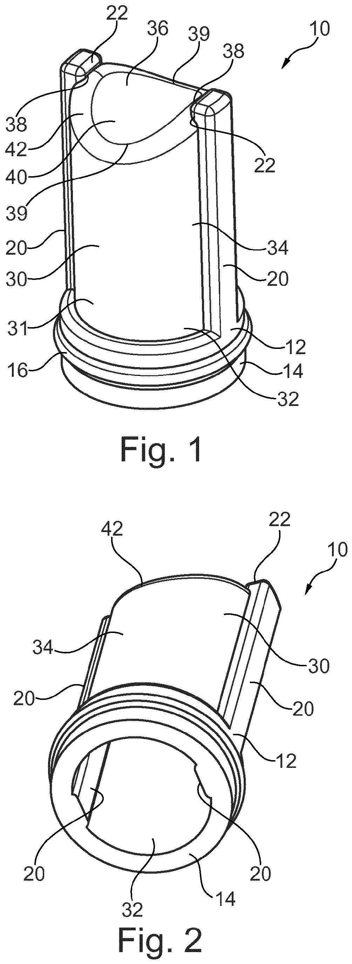

Gemäß einem ersten Ausführungsbeispiel gemäß den Figuren 1 und 2 ist ein erfindungsgemäßer Filter 10 kerzenförmig mit einem rohrstutzenartigen Sockel 14 ausgebildet. Der ringförmige Sockel 14 ist an seiner Außenseite mit einem Dichtring 16 versehen, so dass der Filter 10 mit dem Sockel 14 in eine Leitung eingebaut werden kann. An dem Sockel 14 sind zwei gegenüberliegende, sich im Wesentlichen parallel zur Längsachse des Filters 10 erstreckende Stützstreben 20 angeordnet. Die Stützstreben 20 bilden mit dem Sockel 14 ein Rahmenteil 12, in welchem ein becherförmiges oder taschenförmiges Filterelement 30 aufgenommen und gehalten ist. Wie aus Fig. 2 zu ersehen ist, wird die Stützstrebe 20 entlang der Innenseite und der Außenseite des Filterelements 30 angeordnet. Somit können verschweißte Randkanten des Filterelements 30 beidseitig von einer Stützstrebe 20 eingeschlossen oder umschlossen sein. Ein Fluid kann durch den Sockel 14 in einen inneren Hohlraum des Filters 10 und dann durch das Filterelement 30 strömen. Alternativ kann auch eine Durchströmung von außen nach innen erfolgen.

Das Filterelement 30 ist aus einem dünnen Filtermaterial 31, insbesondere einem Filtergewebe gebildet. Das Filterelement 30 weist einen hülsenförmigen Umfangsbereich 34 auf. Ein Fußbereich 32 des Filterelementes 30 ist offen und in dem ringförmigen Sockel 14 eingebunden. An einem dem Sockel 14 gegenüberliegenden Kopfbereich 36 ist das Filterelement 30 geschlossen. Das Filterelement 30 mit dem Umfangsbereich 34 und dem Kopfbereich 36 ist aus einem einzelnen Stück Filtermaterial 31 durch Falten und Verschweißen von zwei längs verlaufenden Randkanten gebildet. Die verschweißten Randkanten sind in der Darstellung gemäß Fig. 1 von den balkenartigen Stützstreben 20 verdeckt.

Der Kopfbereich 36 des Filterelementes 30 weist erfindungsgemäß eine Sattelform mit einem geschwungenen Rand 42 auf. Entlang des geschwungenen Randes 42 sind an zwei gegenüberliegenden konvexen Abschnitten zwei seitliche Spitzen 38 ausgebildet. In einem angrenzenden konkaven Bereich des Randes 42 sind zwei Tiefpunkte 39 angeordnet. Zwischen den beiden gleichhohen Spitzen 38 erstreckt sich quer zu einer Längsachse des Filters 10 und auch quer zur Verbindungslinie zwischen den beiden Spitzen 38 eine rinnenförmige Auskehlung 40. Der Grund der rinnenförmigen Auskehlung 40 läuft durch die beiden Tiefpunkte 39, welche niveaugleich angeordnet sind.

Der sattelförmige Kopfbereich 36 weist durch die spezielle Formgebung eine relativ große Filterfläche bei einer hohen Formstabilität auf. Aufgrund der hohen Formstabilität ist es bei der gezeigten Ausführungsform ausreichend, dass das dünnwandige Filterelement 30 ausschließlich durch eine im Wesentlichen linienförmige Verbindung mit den innen- und außenliegenden Stützstreben 20 gehalten ist. Die Stützstreben 20 weisen jeweils an ihrem oberen freien Ende eine radial nach innen ragende Abdeckkappe 22 auf, in welchen jeweils eine Spitze 38 zumindest teilweise aufgenommen und gehalten ist.

Das Filterelement 30 kann in das Rahmenteil 12 eingeklebt oder vorzugsweise unmittelbar beim Spritzgießen mit dem Rahmenteil 12 verbunden sein.

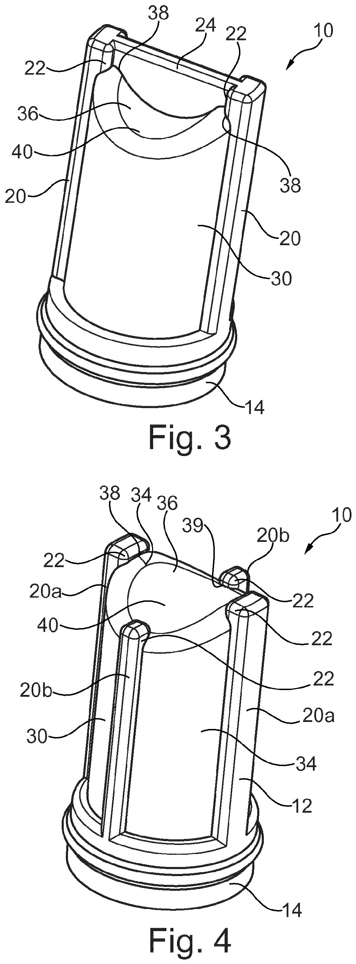

Eine weitere Ausführungsform eines erfindungsgemäßen Filters 10 ist in Fig. 3 dargestellt, wobei der Filter 10 im Wesentlichen so aufgebaut ist, wie der Filter 10 von Fig. 1. Im Unterschied zum Filter 10 gemäß Fig. 1 weist die zweite Ausführungsform nach Fig. 2 am Kopfbereich 36 eine zusätzliche Querstrebe 24 auf. Die balkenförmige Querstrebe 24 erstreckt sich zwischen den beiden distalen Enden der zwei Stützstreben 20. Das Filtermaterial 31 des Filterelementes 30 ist im Kopfbereich 36 mit der entsprechen konturierten Unterseite der Querstrebe 24 verbunden. Auf diese Weise dient die Querstrebe 24 als eine zusätzliche Versteifung und Halterung der Filterfläche am Kopfbereich 36.

Die dritte Ausführungsform eines erfindungsgemäßen Filters 10 gemäß Fig. 4 basiert auf der beschriebenen ersten Ausführungsform gemäß Fig. 1. Zusätzlich zu der ersten Ausführungsform mit einem ersten Paar von Stützstreben 20a weist das Rahmenteil 12 ein zweites Paar von Stützstreben 20b auf, wobei die beiden Paare um 90° zueinander versetzt angeordnet sind.

Wie bei der ersten Ausführungsform gemäß Fig. 1 erstrecken sich die Stützstreben 20a des ersten Paares bei der Ausführungsform gemäß Fig. 4 linear entlang des Umfangsbereiches 34 des Filterelementes 30 bis zu den Spitzen 38 am Kopfbereich 36. Die Stützstreben 20b des zweiten Paares erstrecken sich vom Sockel 14 längs des Umfangsbereiches 34 des Filterelementes 30 bis zu den Tiefpunkten 39 der Auskehlung 40 am sattelförmigen Kopfbereich 36. Der Kopfbereich 36 wird so an den Maxima und Minima des Randbereiches 42 durch die vertikalen Stützstreben 20a, 20b mit ihren jeweiligen, radial nach innen ragenden Abdeckkappen 22 gestützt und gehalten. Zudem ist in Fig. 4 noch am Rand 42 des Kopfbereiches 36 eine verschweißte Randkante 34 angedeutet, welche sich weiter entlang der Streben 20a am Umfangsbereich 34 des hülsenförmigen Filterbereiches 30 bis zum Sockel 14 erstreckt.

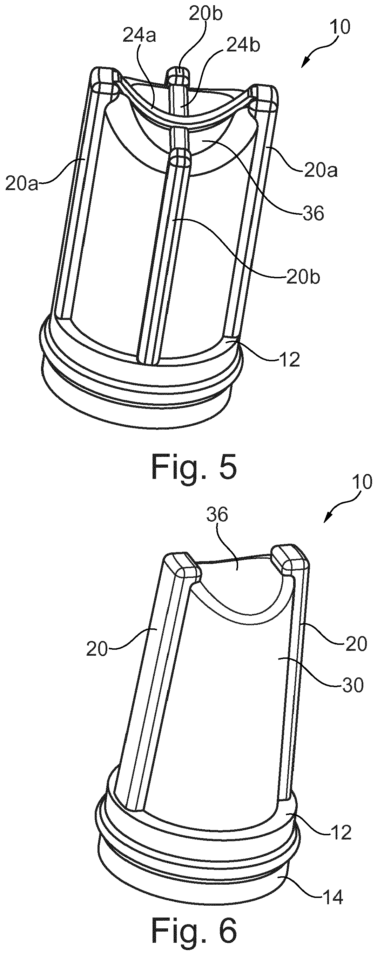

In Fig. 5 ist eine vierte Ausführungsform eines erfindungsgemäßen Filters 10 dargestellt. Die vierte Ausführungsform entspricht weitgehend der dritten Ausführungsform gemäß Fig. 4, wobei die zwei Paare von Stützstreben 20a, 20b jeweils am Kopfbereich 36 eine Querstrebe 24a, 24b aufweisen. Die beiden Querstreben 24a, 24b kreuzen sich im Bereich der Längsachse des Filters 10 in einem rechten Winkel. Die beiden Querstreben 24a, 24b sind als relativ dünne Balken ausgebildet, welche in ihrer Erstreckungsrichtung der Sattelform des Kopfbereiches 36 folgen und sich an die jeweilige Kontur anschmiegen.

Gemäß Fig. 6 ist eine fünfte Ausführungsform eines erfindungsgemäßen Filters 10 dargestellt, welcher ein Rahmenelement 12 mit zwei Stützstreben 20 aufweist. Diese fünfte Ausführungsform ähnelt der Ausführungsform gemäß Fig. 1, wobei bei dem Filter 10 gemäß der fünften Ausführungsform das Filterelement 30 konisch ausgebildet ist. Dabei verjüngt sich das Filterelement 30 vom Sockel 14 her zum Kopfbereich 36. Entsprechend ist das Rahmenteil 12 mit zwei Querstreben 20 ausgebildet, welche zur Mitte hin geneigt verlaufen und so an die konische Außenkontur des Umfangsbereiches 34 des Filterelementes 30 angepasst sind. Die Ausführungsformen gemäß den Figuren 1 bis 5 können auch konisch ausgebildet sein, während die Ausführungsform gemäß Fig. 6 auch zylindrisch sein kann.

## Patentansprüche

1. Filter zum Filtern einer Flüssigkeit oder eines Gases mit
- einem taschenförmigen Filterelement (30), welches einen hülsenförmigen Umfangsbereich (34), einen geschlossenen Kopfbereich (36) und einen offenen Fußbereich (32) aufweist, und
- einem Rahmenelement (12), welches einen ringförmigen rohrstutzenartigen Sockel (14), in welchem der Fußbereich (32) des Filterelementes (30) aufgenommen ist, und mindestens eine Stützstrebe (20) aufweist, welche sich von dem Sockel (14) weg entlang des Umfangsbereiches (34) des Filterelementes (30) erstreckt,
**dadurch gekennzeichnet,**
**dass** der vom Sockel (14) abgewandte Kopfbereich (36) des Filterelementes (30) sattelförmig ausgebildet ist, wobei zwei seitliche Spitzen (38) vorgesehen sind, zwischen denen eine rinnenförmige Auskehlung (40) ausgebildet ist.

2. Filter nach Anspruch 1,
**dadurch gekennzeichnet,**
**dass** das taschenförmige Filterelement (30) aus einem einzelnen flächigen Filtermaterial (31) durch Falten und Verschweißen von Randkanten (33) gebildet ist.

3. Filter nach Anspruch 2,
**dadurch gekennzeichnet,**
**dass** zwei verschweißte Randkanten (33) vorgesehen sind, welche entlang einer Längsachse des Filterelementes (30) verlaufen und sich von dem Fußbereich (32) zu dem Kopfbereich (36) des taschenförmigen Filterelementes (30) erstrecken.

4. Filter nach einem der Ansprüche 1 bis 3,
**dadurch gekennzeichnet,**
**dass** die mindestens eine Stützstrebe (20) sich entlang mindestens einer verschweißten Randkante (33) des Filterelementes (30) von dem Sockel (14) bis zu einer der Spitzen (38) im Kopfbereich (36) erstreckt und
**dass** die verschweißte Randkante (33) durch die Stützstrebe (20) abgedeckt sind.

5. Filter nach einem der Ansprüche 1 bis 4,
**dadurch gekennzeichnet,**
**dass** mindestens zwei Stützstreben (20) paarweise vorgesehen sind, welche sich entlang von gegenüberliegenden Seiten des taschenförmigen Filterelementes (30) erstrecken.

6. Filter nach Anspruch 5,
**dadurch gekennzeichnet,**
**dass** an dem Kopfbereich (36) die zwei Stützstreben (20) eines Paares durch mindestens eine Querstrebe (24) miteinander verbunden sind.

7. Filter nach Anspruch 5 oder 6,
**dadurch gekennzeichnet,**
**dass** zwei Paare von Stützstreben (20) angeordnet sind, welche um 90° versetzt zueinander am Umfang des Sockels (14) angeordnet sind.

8. Filter nach Anspruch 6 oder 7,
**dadurch gekennzeichnet,**
**dass** die mindestens eine Querstrebe (24) an die Sattelform des Kopfbereiches (36) angepasst ist.

9. Filter nach einem der Ansprüche 1 bis 8,
**dadurch gekennzeichnet,**
**dass** mindestens eine Stützstrebe (20) und/oder mindestens eine Querstrebe (24) an der Innenseite und der Außenseite des taschenförmigen Filterelementes (30) angeordnet und mit dieser verbunden ist.

10. Filter nach einem der Ansprüche 1 bis 9,
**dadurch gekennzeichnet,**
**dass** das Rahmenelement (12) aus einem Kunststoffmaterial durch Gießen, insbesondere Spritzgießen, hergestellt ist, wobei das Filterelement (30) beim Gießen mit dem Rahmenelement (12) fest verbunden ist.

11. Filter nach einem der Ansprüche 1 bis 10,
**dadurch gekennzeichnet,**
**dass** das Filterelement (30) ein Gewebe, ein Vlies, ein Gewirk und/oder eine Membran aufweist.

12. Filter nach einem der Ansprüche 1 bis 11,
**dadurch gekennzeichnet,**
**dass** der Umfangsbereich (34) des Filterelementes (30) zylindrisch oder konisch ausgebildet ist.

## Claims

1. Filter for filtering a liquid or a gas with
- a pocket-shaped filter element (30) which has a sleeve-shaped circumferential region (34), a closed head region (36) and an open foot region (32), and
- a frame element (12) which has an annular pipe-socket-like base (14), in which the foot region (32) of the filter element (30) is accommodated, and at least one supporting strut (20) which extends away from the base (14) along the circumferential region (34) of the filter element (30),
**characterized in that**
the head region (36) of the filter element (30) which faces away from the base (14) is designed in a saddle-shaped manner, wherein two lateral tips (38) are provided, between which a trough-shaped recess (40) is designed.

2. Filter according to claim 1,
**characterized in that**
the pocket-shaped filter element (30) is formed of a single planar filter material (31) by folding and welding marginal edges (33).

3. Filter according to claim 2,
**characterized in that**
two welded marginal edges (33) are provided which run along a longitudinal axis of the filter element (30) and extend from the foot region (32) to the head region (36) of the pocket-shaped filter element (30).

4. Filter according to any one of claims 1 to 3,
**characterized in that**
the at least one supporting strut (20) extends along at least one welded marginal edge (33) of the filter element (30) from the base (14) to one of the tips (38) in the head region (36) and
**in that** the welded marginal edge (33) is covered by the supporting strut (20).

5. Filter according to any one of claims 1 to 4,
**characterized in that**
at least two supporting struts (20) are provided in pairs which extend along opposite sides of the pocket-shaped filter element (30).

6. Filter according to claim 5,
**characterized in that**
in the head region (36) the two supporting struts (20) of a pair are connected to each other by at least one cross strut (24).

7. Filter according to claim 5 or 6,
**characterized in that**
two pairs of supporting struts (20) are arranged which are arranged offset to each other by 90° on the circumference of the base (14).

8. Filter according to claim 6 or 7,
**characterized in that**
the at least one cross strut (24) is adapted to the saddle shape of the head region (36).

9. Filter according to any one of claims 1 to 8,
**characterized in that**
at least one supporting strut (20) and/or at least one cross strut (24) is arranged on the internal side and the external side of the pocket-shaped filter element (30) and connected thereto.

10. Filter according to any one of claims 1 to 9,
**characterized in that**
the frame element (12) is produced of a plastic material through molding, in particular through injection molding, wherein the filter element (30) is firmly connected to the frame element (12) during molding.

11. Filter according to any one of claims 1 to 10,
**characterized in that**
the filter element (30) has a woven fabric, a fleece, a knitted fabric and/or a membrane.

12. Filter according to any one of claims 1 to 11,
**characterized in that**
the circumferential region (34) of the filter element (30) is designed cylindrically or conically.

## Revendications

1. Filtre destiné à filtrer un liquide ou un gaz, avec
- un élément filtrant (30) présentant une forme de poche, lequel présente une zone périphérique (34) en forme de douille, une zone supérieure (36) fermée et une zone inférieure (32) ouverte, et
- un élément de cadre (12), qui présente un socle (14) annulaire de type tubulure, dans lequel la zone inférieure (32) de l'élément filtrant (30) est logée, et au moins une entretoise d'appui (20), qui s'étend en s'éloignant du socle (14) le long de la zone périphérique (34) de l'élément filtrant (30),
**caractérisé en ce**
**que** la zone supérieure (36), opposée au socle (14), de l'élément filtrant (30) est réalisée en forme de selle, dans lequel deux pointes (38) latérales sont prévues, entre lesquelles une gorge (40) présentant une forme de rigole est réalisée.

2. Filtre selon la revendication 1,
**caractérisé en ce**
**que** l'élément filtrant (30) présentant une forme de poche est formé à partir d'un unique matériau filtrant (31) plat par pliage et soudage d'arêtes de bordure (33).

3. Filtre selon la revendication 2,
**caractérisé en ce**
**que** deux arêtes de bordure (33) soudées sont prévues, lesquelles s'étendent le long d'un axe longitudinal de l'élément filtrant (30) et s'étendent depuis la zone inférieure (32) en direction de la zone supérieure (36) de l'élément filtrant (30) présentant une forme de poche.

4. Filtre selon l'une quelconque des revendications 1 à 3,
**caractérisé en ce**
**que** l'au moins une entretoise de soutien (20) s'étend le long au moins d'une arête de bordure (33) soudée de l'élément filtrant (30) depuis le socle (14) jusqu'à l'une des pointes (38) dans la zone supérieure (36), et
en ce que l'arête de bordure (33) soudée est recouverte par l'entretoise de soutien (20).

5. Filtre selon l'une quelconque des revendications 1 à 4,
**caractérisé en ce**
**qu'**au moins deux entretoises de soutien (20) sont prévues par paire, lesquelles s'étendent le long de côtés se faisant face de l'élément filtrant (30) présentant une forme de poche.

6. Filtre selon la revendication 5,
**caractérisé en ce**
**que** les deux entretoises de soutien (20) d'une paire sont reliées l'une à l'autre par au moins une entretoise transversale (24) au niveau de la zone supérieure (36).

7. Filtre selon la revendication 5 ou 6,
**caractérisé en ce**
**que** deux paires d'entretoises de soutien (20) sont disposées, lesquelles sont disposées selon un décalage de 90° l'une par rapport à l'autre au niveau de la périphérie du socle (14).

8. Filtre selon la revendication 6 ou 7,
**caractérisé en ce**
**que** l'au moins une entretoise transversale (24) est adaptée à la forme de selle de la zone supérieure (36).

9. Filtre selon l'une quelconque des revendications 1 à 8,
**caractérisé en ce**
**qu'**au moins une entretoise de soutien (20) et/ou au moins une entretoise transversale (24) sont disposées au niveau du côté intérieur et du côté extérieur de l'élément filtrant (30) présentant une forme de poche et sont reliées à ce dernier.

10. Filtre selon l'une quelconque des revendications 1 à 9,
**caractérisé en ce**
**que** l'élément de cadre (12) est fabriqué à partir d'un matériau en plastique par coulée, en particulier par moulage par injection, dans lequel l'élément filtrant (30) est relié de manière solidaire à l'élément de cadre (12) lors de la coulée.

11. Filtre selon l'une quelconque des revendications 1 à 10,
**caractérisé en ce**
**que** l'élément filtrant (30) présente un tissu, un non-tissé, un tricot et/ou une membrane.

12. Filtre selon l'une quelconque des revendications 1 à 11,
**caractérisé en ce**
**que** la zone périphérique (34) de l'élément filtrant (30) est réalisée de manière cylindrique ou de manière conique.
